# DEMANDE DE BREVET EUROPEEN

(11) **EP 1 806 274 A1**
(43) Date de publication de la demande: **11.07.2007**
(21) Numéro de dépôt: 06301215.7
(22) Date de dépôt: 05.12.2006
(51) Int. Cl.: B62D 65/06

(54) **Support d'aile de véhicule automobile**

(30) Priorité: 05.01.2006 FR 0650036
(71) Demandeur: Renault, 92109 Boulogne Billancourt (FR)
(72) Inventeur: Nicolleau, M. Yannick, Bouafle 78410 (FR); Rutard, M. Lionel, Maurepas 78310 (FR)

(57) **Abrégé**

Support (10) d'aile (64) d'une structure (3) de véhicule automobile (7) qui comporte un capot (48) destiné à coopérer avec un moyen de maintien (8) en position de maintien du capot (48) en vue d'au moins un traitement de la structure (3) **caractérisé en ce que** le moyen de maintien (8) est intégré au support d'aile (10) **et en ce qu'**au moins une zone de rupture (5, 11) permet de séparer le moyen de maintien (8) du support (10) d'aile (64) après la fin des traitements de la structure (3).

## Description

L'invention concerne un support d'aile d'une structure de véhicule automobile qui comporte un capot destiné à coopérer avec un moyen de maintien en position de maintien du capot en vue d'au moins un traitement de la structure.

Généralement, pour maintenir un capot lors d'un procédé de traitement de surface de la structure d'un véhicule automobile, un élément rapporté est utilisé. Par exemple, une béquille centrale est intégrée à la palette sur laquelle est montée le véhicule dans la chaîne de fabrication. Un tel un élément rapporté doit être agencé correctement sur le véhicule tant au niveau géométrique et que dans le temps imposé par la cadence de la chaîne de montage.

L'invention vise à remédier à ces inconvénients en proposant un moyen simplifié de maintien en position du capot en vue d'au moins un traitement de la structure.

A cet effet, l'invention propose un support d'aile du type cité ci-dessus, caractérisé en ce que le moyen de maintien est intégré au support d'aile et en ce qu'au moins une zone de rupture permet de séparer la butée du support d'aile après la fin des traitements de la structure.

Selon d'autres caractéristiques de l'invention, le moyen de maintien comporte un corps d'axe vertical porté par le support d'aile.

Selon d'autres caractéristiques de l'invention, la zone de rupture est située entre le corps et une extrémité du support d'aile.

Selon d'autres caractéristiques de l'invention, un moyen de liaison relie une extrémité libre du corps au support d'aile.

Selon d'autres caractéristiques de l'invention, le moyen de liaison comporte une zone de rupture.

D'autres caractéristiques et avantages de l'invention apparaîtront à la lecture de la description d'exemples de réalisation en référence aux figures annexées.

La figure 1 représente une vue en coupe de la partie avant d'un véhicule automobile comportant de chaque côté un support muni de deux butées selon un mode de réalisation de l'invention.

La figure 2 représente une vue en coupe selon l'axe III-III de la partie avant du véhicule muni de chaque côté d'un support selon la figure 1.

La figure 3 représente une vue en perspective d'un support muni d'une butée selon le mode de réalisation.

La figure 4 représente une vue en perspective d'une butée selon le mode de réalisation.

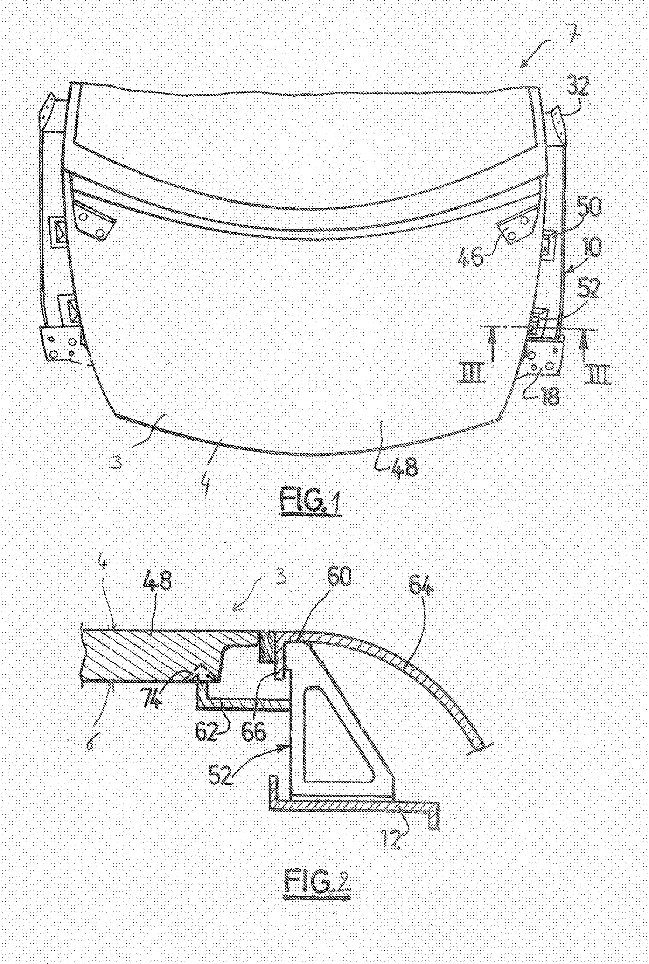

Dans la description qui suit, nous prendrons à titre non limitatif une orientation longitudinale, verticale et transversale indiquée par le trièdre L, V, T des figures 1 à 4.

Des éléments identiques ou analogues sont désignés par les mêmes chiffres de référence.

Tel que représenté aux figures 1 et 2, un véhicule automobile 7 comporte une structure 3 ayant un capot 48 disposant d'une face inférieure 6 et d'une face supérieure 4, deux ailes 64 et deux supports 10 d'aile 64.

Le capot 48 est mobile selon un axe transversal A. Le plan de la face inférieure 6 du capot 48 forme un angle avec le plan défini par l'axe longitudinal L et l'axe transversal T. Lors de traitements de la structure 3, cet angle est choisi de façon à respecter différents critères liés, en particulier, aux traitements de la structure 3 (température de traitement thermique), la matière choisie (thermoplastique, métal) de la structure, la forme de la structure (en particulier la forme de la face avant du capot) et son orientation. Cet angle peut être compris par exemple entre -10° et + 10°. Selon un premier exemple, si les ailes sont choisies en plastique, l'angle est choisi entre 0° et +10° (supérieur à 0° et inférieur à +10°) pour permettre une déformation des ailes, lors d'un traitement thermique lors du procédé de traitement de la structure 3. Selon un second exemple, si les ailes sont choisies en tôle métallique, l'angle est choisi entre 0° et -10° (supérieur à -10° et inférieur à 0°) pour permettre un traitement de peinture sans empreinte, sans défaut d'application (par exemple, sans piqûre), sans défaut de qualité d'aspect (par exemple, sans peau d'orange). Lors des traitements de la structure 3, le capot 48 est maintenu par l'intermédiaire de deux moyens de maintien 8 qui sont intégrés aux supports 10 d'aile 64. Dans la suite de la description, les moyens de maintien sont des butées 8. Une fois les traitements de la structure 3 terminés, le capot 48 est mis en position fermée, l'angle est choisi sensiblement égal à 0° et la butée 8 peut être séparée du support 10.

Ces supports 10 étant sensiblement identiques, un seul support 10 sera décrit.

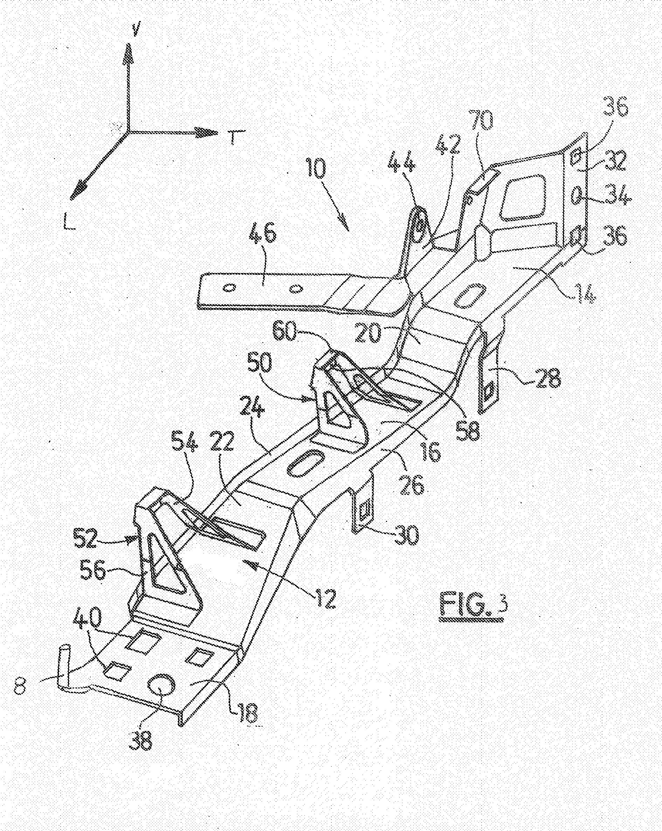

Tel que représenté à la figure 3, le support 10 est constitué d'une pièce sensiblement plate et allongée selon l'axe longitudinal L.

Dans notre mode de réalisation, le support 10 est en matière plastique.

Le support 10 comprend une bande en gradins 12 comprenant une portée supérieure plate 14, une portée centrale plate 16 et une portée inférieure plate 18 qui sont reliées entre elles respectivement par des paliers de raccordement inclinés 20, 22. Le support 10 est bordé le long de ses côtés longitudinaux par un premier rebord replié vers le haut 24 et par un second rebord replié vers le bas 26 qui lui confèrent de la rigidité.

Du second rebord s'étendent vers le bas plusieurs pattes 28,30 destinées à fixer le support 10 sur un premier élément de structure longitudinal, non représenté, du véhicule automobile 7.

Le support 10 comporte également une patte arrière 32 percée d'un trou pilote 34 par lequel l'extrémité arrière du support 10 est indexée, au moyen d'une vis, sur un second élément de structure 3 du véhicule 7, par exemple, le pied avant de la portière, non représenté. La fixation définitive de cette extrémité arrière est effectuée, de façon réglable selon l'axe longitudinal L et l'axe vertical V au moyen de vis que l'on visse dans le pied avant à travers deux trous surdimensionnés 36, percés dans la patte arrière.

La portée inférieure 18 comporte un trou pilote 38 grâce auquel l'extrémité avant du support est indexée, au moyen d'une vis, sur un troisième élément de structure du véhicule 7, par exemple une traverse avant, non représentée, qui porte en particulier les projecteurs, la calandre. La fixation définitive se fait de façon réglable selon l'axe transversal T au moyen de vis passant à travers des trous surdimensionnés 40 percés sur la portée.

Sur le rebord 24 au niveau de la portée supérieure 14 fait saillie une patte d'articulation 42 qui porte un axe d'articulation 44 orienté selon l'axe transversal T. Sur l'axe 44 est articulée une ferrure 46 sur laquelle est fixée la partie arrière du capot 48 du véhicule 7.

Le support 10 est également muni de deux pontets 50, 52 permettant l'accrochage des ailes 64 du véhicule 7. Les pontets 50, 52 sont fixés sur la portée centrale 16 et sur le palier de raccordement 22. Chaque pontet 50, 52 est en forme de U renversé. Chaque pontet 50, 52 comporte deux pieds 54, 56 reliés par une traverse 58 contenue dans un plan sensiblement perpendiculaire aux plans contenant les pieds 54, 56. Les pieds 54, 56 sont également reliés à leur extrémité supérieure par des surfaces d'appui 60. Les plans contenant les pieds sont parallèles au plan décrit par l'axe vertical V et l'axe transversal T. Le plan contenant la traverse 58 est parallèle au plan décrit par l'axe vertical V et l'axe longitudinal L.

Telle que représentée à la figure 2, l'aile 64 repose, ainsi, le long de son côté longitudinal supérieur sur les surfaces d'appui 60 et sur une surface d'appui 70 formée à l'extrémité arrière du support 10.

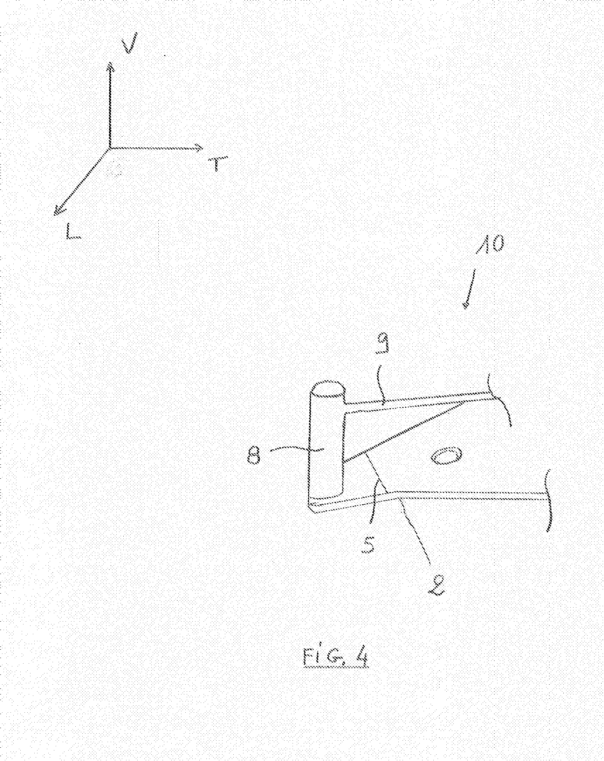

Telle que représentée aux figures 3 et 4, l'extrémité avant du support 10 comporte la butée 8 qui dispose d'un corps 4 de forme allongée d'axe vertical V.

La butée 8 est dimensionnée de façon à assurer la position de maintien du capot 48 lors de la réalisation d'une étape d'un procédé en chaîne de montage en particulier lors d'un traitement de la structure 3 du véhicule automobile 7 (tel qu'un traitement thermique, une cataphorèse, une application de peinture) et la position fermée du capot 48 après les traitements de structure 3.

Tel que représenté à la figure 4, le support 10 comporte un moyen de liaison, une traverse 9, qui relie une extrémité libre 6 du corps 4 de la butée 8 au support 10. Ainsi, la butée 8 est renforcée pour la position de maintien du capot 48.

La butée 8 peut être sécable de façon à désolidariser la butée 8 du support 10 après la fin des traitements de la structure 3. La butée peut comporter deux zones de rupture 5, 11. La première zone de rupture est une ligne d'amorce de rupture 5 située entre la base du corps 4 de la butée 8 et une extrémité 2 du support 10. La seconde zone de rupture 11 est située au niveau de la traverse 9. Ainsi, lorsque la réalisation des procédés de traitement de la structure 3 du véhicule automobile 7 est terminée, la butée 8 peut être cassée par l'intermédiaire des zones de rupture 5. Le capot 48 peut alors être en position fermée.

L'invention propose donc un support 10 intégrant une butée 8 de capot 48 d'un véhicule automobile 7. Cette intégration permet de limiter le nombre d'étapes sur une chaîne de fabrication d'un véhicule automobile 7. L'installation et la désinstallation d'un outillage par exemple d'une béquille pour maintenir le capot en position et pour fermer le capot ne doivent plus être effectuées. Le support 10 intègre directement la fonction du maintien de capot 48 et permet d'enlever la butée 8 facilement par les zones de rupture 5, 11.

Cette invention n'est pas limitée au mode de réalisation décrit et illustré qui a été donné à titre d'exemple.

Par exemple, concernant la forme de la butée 8, le nombre de butées 8, la matière de la butée 8, la forme du support 10. La butée 8 n'est pas nécessairement un corps allongé. Une butée peut être utilisée ou plus de deux butées peuvent être utilisées. Le support 10 intégrant la butée 8 peut être réalisé en matière rigide, par exemple en métal, ou en matière thermoplastique ou thermodurcissable.

## Revendications

1. Support (10) d'aile (64) d'une structure (3) de véhicule automobile (7) qui comporte un capot (48) destiné à coopérer avec un moyen de maintien (8) en position de maintien du capot (48) en vue d'au moins un traitement de la structure (3) **caractérisé en ce que** le moyen de maintien (8) est intégré au support d'aile (10) et **en ce qu'**au moins une zone de rupture (5, 11) permet de séparer le moyen de maintien (8) du support (10) d'aile (64) après la fin des traitements de la structure (3).

2. Support (10) d'aile (64) selon la revendication 1, **caractérisé en ce que** le moyen de maintien (8) comporte un corps (4) d'axe vertical (V) porté par le support (10) d'aile (64).

3. Support (10) d'aile (64) selon la revendication 2, **caractérisé en ce que** la première zone de rupture (5) est située entre le corps (4) et une extrémité (2) du support (10) d'aile (64).

4. Support (10) d'aile (64) selon la revendication 2, **caractérisé en ce qu'un** moyen de liaison (9) relie une extrémité libre (6) du corps (4) au support (10) d'aile (64).

5. Support (10) d'aile (64) selon la revendication 4, **caractérisé en ce que** le moyen de liaison (9) comporte la seconde zone de rupture (11).
